# FASCICULE DE BREVET EUROPEEN

(11) **EP 2 235 133 B1**
(45) Date de publication et mention de la délivrance du brevet: **13.07.2011**
(21) Numéro de dépôt: 08872961.1
(22) Date de dépôt: 15.12.2008
(51) Int. Cl.: C09J 175/08, C08L 75/04, C08G 18/71, C08G 18/10, C09J 7/02, C09J 125/16, C08G 18/48, C09J 165/00, C08J 3/24, G09F 3/04

(54) **ADHESIFS SENSIBLES A LA PRESSION A POUVOIR ADHESIF STABLE EN TEMPERATURE**
DRUCKEMPFINDLICHE KLEBSTOFFE, DIE ÜBER EINE TEMPERATURBESTÄNDIGE KLEBEKRAFT VERFÜGEN
PRESSURE-SENSITIVE ADHESIVES HAVING A TEMPERATURE-STABLE ADHESIVE POWER

(30) Priorité: 21.12.2007 FR 0709027
(43) Date de publication de la demande: 06.10.2010
(73) Titulaire: BOSTIK SA, 92400 Courbevoie (FR)
(72) Inventeur: POIVET, Sylwia, F-75015 Paris (FR); GOUBARD, David, F-60200 Compiègne (FR)
(74) Mandataire: Granet, Pierre
(86) Numéro de dépôt international: PCT/FR2008/001734
(87) Numéro de publication internationale: WO 2009/106699

(56) Documents cités:
- EP-A- 0 931 800
- EP-A- 1 715 015
- WO-A-98/30648
- US-A1- 2004 180 155

## Description

La présente invention a pour objet une composition adhésive réticulable par chauffage, et un support auto-adhésif revêtu d'un adhésif sensible à la pression consistant en ladite composition réticulée. Ledit support autoadhésif est utile pour la fabrication d'étiquettes et/ou de rubans auto-adhésifs et possède avantageusement un pouvoir adhésif qui peut être maintenu dans un large domaine de température.

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives. Les PSA sont également mis en oeuvre pour la fabrication de rubans auto-adhésifs d'utilisations variées. On peut citer par exemple outre le ruban adhésif transparent largement utilisé dans la vie quotidienne : la mise en forme et l'assemblage d'emballages en carton ; la protection de surfaces pour les travaux de peinture, dans la construction ; le maintien de câbles électriques dans l'industrie des transports ; le collage des moquettes par rubans adhésifs à double face.

En vue de la fabrication d'étiquettes et/ou rubans auto-adhésifs, les PSA sont souvent appliqués par des procédés d'enduction en continu sur la totalité de la surface d'une couche support (le cas échéant imprimable) de grandes dimensions, à raison d'une quantité (généralement exprimée en glm²) et désignée ci-après par le terme de "grammage". La couche support est constituée de papier ou de film d'un matériau polymère à une ou plusieurs couches. La couche d'adhésif qui recouvre la couche support peut être elle-même recouverte d'une couche anti-adhérente protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ces systèmes multicouches peuvent être ultérieurement convertis en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche anti-adhérente protectrice peut être facilement enlevée sans modification de la couche d'adhésif qui reste fixée sur la couche support. Après séparation de sa couche anti-adhérente protectrice, l'étiquette est appliquée sur l'article à revêtir soit manuellement, soit à l'aide d'étiqueteuses sur des chaînes automatisées de conditionnement.

Ces systèmes multicouches peuvent être également transformés en rubans auto-adhésifs par découpe et conditionnement en rouleaux de largeur et de longueur déterminées.

Les PSA permettent, en raison de leur tack élevé à température ambiante, une prise ou accroche rapide de l'étiquette et/ou du ruban auto-adhésifs sur le substrat (ou article) à revêtir (par exemple, s'agissant d'étiquettes, sur des bouteilles ou bien, s'agissant de rubans, sur des cartons d'emballage à mettre en forme), propre à l'obtention de cadences de production industrielle importantes.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en oeuvre de rubans auto-adhésifs pour l'assemblage de pièces pour lesquelles une bonne tenue thermique est nécessaire comme dans le cas, par exemple, de l'habillage intérieur des avions ou autres véhicules.

Des PSA souvent utilisés pour ce domaine d'application comprennent des polymères (ou copolymères) de type acrylate de masse molaire très élevée. Ces derniers se présentent sous la forme soit d'émulsion aqueuse soit de solution organique. Toutefois, l'enduction de tels PSA sur une couche support est compliquée, au plan industriel, par le fait qu'il est nécessaire de prévoir soit une étape supplémentaire de séchage de l'émulsion, soit des installations particulières prenant en compte les problèmes d'hygiène et de sécurité industrielles liés à l'évaporation du solvant organique. Dans les 2 cas, les inconvénients liés à l'odeur désagréable des acryliques doivent également être pris en compte.

On connaît des PSA qui ne comprennent ni solvant ni eau. Ainsi, les adhésifs thermofusibles sensibles à la pression (également dénommés en anglais Hot Melt Pressure Sensitive Adhesive ou HMPSA) sont des substances solides à température ambiante, qui sont déposées (ou enduites) sur le support à l'état fondu, et assurent à ce dernier après refroidissement un tack et un pouvoir adhésif importants sur divers substrats. Cependant, les compositions correspondantes comprennent généralement un polymère thermoplastique, de sorte que le joint de colle assurant la fixation du support au substrat ne présente pas à température élevée toute la cohésion nécessaire pour le domaine d'application visé précédemment

Le brevet US 6486229 décrit une composition adhésive thermofusible réticulable aux UV comprenant une résine tackifiante, un photoinitiateur et un copolymère multibloc radial styrène-butadiène, dont le bloc butadiène a une teneur élevée en groupe vinyl pendant. Cette composition est enduite à l'état non réticulé sur une couche support, puis réticulée par exposition à un rayonnement ultra-violet. Le support auto-adhésif ainsi obtenu convient particulièrement pour les applications des rubans et étiquettes pour lesquelles une bonne cohésion à température élevée est requise. La demande internationale WO 2004/011559 décrit une composition acrylique susceptible d'être enduite comprenant un copolymère acrylique, un photoinitiateur et un (méth)acrylate multifonctionnel. Cette composition peut également être réticulée par exposition à un rayonnement ultra-violet pour donner un PSA à haute performance.

Ces techniques d'obtention de PSA présentent toutefois des inconvénients qui découlent des problèmes d'hygiène industrielle liés aux lampes UV et des coûts associés à la faible durée de vie de celles-ci. De plus, dans le cas de supports auto-adhésifs à fort grammage en PSA, par exemple un grammage supérieur à 70 glm², il est difficile d'assurer le maintien du pouvoir adhésif dans un large domaine de température, et notamment à température élevée.

La demande de brevet EP 0106330 décrit une composition qui offre notamment de bonnes propriétés de tack et de résistance à la chaleur, et qui comprend une résine tackifiante et un polyéther à groupe terminal hydrolysable silyl. Cette demande décrit également la production d'un produit adhésif sensible à la pression par dépôt sur un support de ladite composition dans laquelle a été incorporé un catalyseur, puis réticulation à une température variant entre la température ambiante et 150°C. La demande de brevet CA 2554743 enseigne une composition qui comprend une résine tackifiante, un catalyseur et un polymère oxyalkylène contenant de 0,3 à 0,7 équivalent de groupe silyl hydrolysable dans chaque molécule de masse molaire comprise entre 15 000 et 100 000. Ladite composition est appliquée sur un support au moyen d'un enducteur et réticulée à chaud pour donner un produit auto-adhésif.

Les produits auto-adhésifs décrits par ces 2 dernières demandes présentent toutefois l'inconvénient que le maintien en température de leur pouvoir adhésif sur un substrat est insuffisant pour des grammages élevés.

La présente invention a pour but de fournir une composition adhésive réticulable par chauffage qui conduise après enduction sur un support puis réticulation, à un adhésif sensible à la pression possédant des propriétés améliorées de pouvoir adhésif et de tack Un autre but de invention est que le joint de colle assurant la fixation du support auto-adhésif ainsi obtenu sur un substrat garde la cohésion requise sur un large domaine de température, y compris pour des grammages élevés en PSA.

La présente invention a donc pour objet en premier lieu une composition adhésive réticulable par chauffage comprenant :
- de 20 à 85 % d'un polyuréthane comprenant 2 groupes terminaux de type alkoxysilane hydrolysables et ayant pour formule (I) : 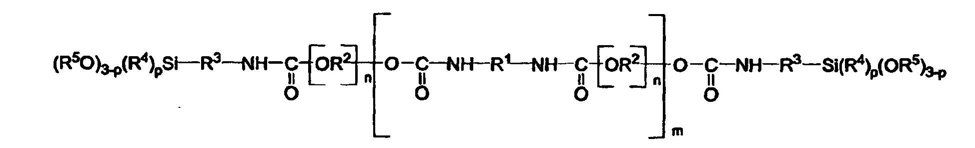 dans laquelle :
   - R¹ représente un radical divalent hydrocarboné comprenant de 5 à 15 atomes de carbone qui peut être aromatique ou aliphatique, linéaire, ramifié ou cyclique ;
   - R² représente un radical divalent alkylène linéaire ou ramifié comprenant de 1 à 4 atomes de carbone ;
   - R³ représente un radical divalent alkylène linéaire comprenant de 1 à 3 atomes de carbone ;
   - R⁴ et R⁵, identiques ou différents, représentent chacun un radical alkyle linéaire ou ramifié de 1 à 4 atomes de carbone, avec la possibilité lorsqu'il y a plusieurs radicaux R⁴ (ou R⁵) que ceux-ci soient identiques ou différents ;
   - n est un nombre entier tel que la masse molaire moyenne en nombre du bloc polyéther de formule -[OR²]ₙ- est comprise entre 300 Da et 30 kDa ;
   - m est un nombre entier tel que la masse molaire moyenne en nombre du polymère de formule (I) est comprise entre 600 Da et 60 kDa ;
   - p est un nombre entier égal à 0,1 ou 2 ;
- de 15 à 80 % d'une résine tackifiante compatible, de masse molaire moyenne en nombre comprise entre 200 Da et 5 kDa, et choisie parmi les résines susceptibles d'être obtenues :
   - (i) par polymérisation d'hydrocarbures terpéniques et de phénols, en présence de catalyseurs de Friedel-Crafts, ou bien
   - (ii) par polymérisation d'alpha-méthyl styrène, et éventuellement par réaction avec des phénols ; et
- de 0,01 à 3 % d'un catalyseur de réticulation.

Dans le présent texte et en l'absence d'indication contraire :
- les quantités exprimées sous la forme de pourcentage correspondent à des pourcentages poids/poids ;
- les radicaux R¹ à R⁵ ainsi que les entiers n, m et p conservent dans les différentes formules chimiques la même signification que celle définie ci-dessus ;
- les masses molaires moyennes en nombre et en poids sont exprimées en dalton (Da) et sont déterminées par chromatographie par perméation de gel, la colonne étant calibrée avec des étalons de PolyEthylène Glycol (PEG).

Le polymère de formule (I) compris dans la composition selon l'invention peut être obtenu selon le procédé suivant

Dans une première étape, on prépare un polyuréthane comprenant 2 groupes terminaux hydroxyles et ayant pour formule (II) : 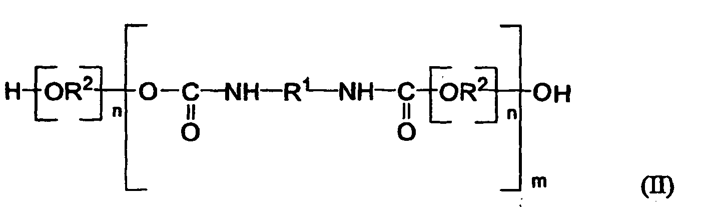 en faisant réagir une mole de diisocyanate de formule (III):

NCO-R¹-NCO (III)

avec environ deux moles d'un polyéther diol de formule (IV) :

H-[OR²]ₙ-OH (IV)

ce qui correspond à un rapport des nombres de fonctions NCO/OH égal à environ 0,5.

La réaction s'effectue à une température comprise entre 60 et 90 °C, durant un temps d'environ 2 à 8 heures, et éventuellement en présence d'un catalyseur.

Le polyuréthane de formule (II) est dans une seconde étape converti en polyuréthane de formule (I) par une réaction de silylation avec un isocyanatosilane de formule (V) :

NCO-R³-Si(R⁴)ₚ(OR⁵)₃₋ₚ (V)

à raison d'environ une mole de polyuréthane de formule (II) pour 2 moles du composé de formule (V).

Les polyéthers diols de formule (IV) sont largement disponibles dans le commerce, et les isocyanatosilanes de formule (V) le sont également On peut citer à titre d'exemple le gamma-isocyanato-n-propyl-triméthoxysilane qui est disponible sous la dénomination Geniosil^{®} GF 40 ou encore le alpha -isocyanato-n-méthyl- méthyldiméthoxysilane qui est disponible sous la dénomination commerciale Geniosil^{®} XL 42, tous deux auprès de la société Wacker.

Ces 2 étapes de synthèses sont conduites dans des conditions anhydres, de manière à éviter l'hydrolyse des groupes alkoxysilanes. Un domaine de température typique pour la mise en oeuvre de ces réactions est de 30° à 120°C, et plus particulièrement de 60 à 90°C. Une légère variation par rapport aux stoechiométries données précédemment peut être envisagée sans inconvénient, à condition toutefois de ne pas dépasser 10 % dans la première étape (synthèse du polyuréthane de formule Il) et 2% dans la seconde étape (synthèse du polyuréthane de formule I).

Il est fait référence au brevet européen EP 0 931 800 pour plus de détails concernant la préparation du polyuréthane de formule (I) à groupes terminaux de type alkoxysilane.

La masse molaire moyenne en nombre du polyuréthane de formule (I) est comprise entre 600 Da et 60 kDa, ce qui correspond à une valeur de m qui varie d'environ 1 à 10.

Selon une variante préférée de la composition selon invention, le polyuréthane de formule (I) est tel que sa masse molaire moyenne en nombre est comprise entre 4 et 50 kDa (ce qui correspond sensiblement à une valeur de m variant de 1 à 4), et la masse molaire moyenne en nombre du bloc polyéther de formule -[OR²]ₙ- est comprise entre 2 et 25 kDa.

Selon une autre variante préférée, prise éventuellement en combinaison avec la précédente, le polyuréthane de formule (I) est tel que :
- R¹ est choisi parmi l'un des radicaux divalents suivants dont les formules ci-dessous font apparaître les 2 valences libres :
   - a) le radical divalent dérivé de l'isophorone :
   - b) 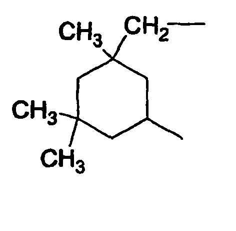
   - c) 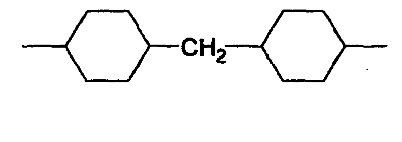 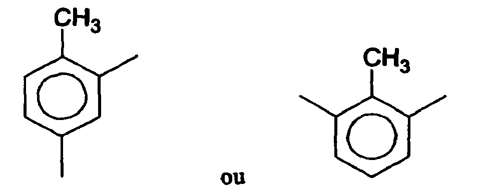
   - d) 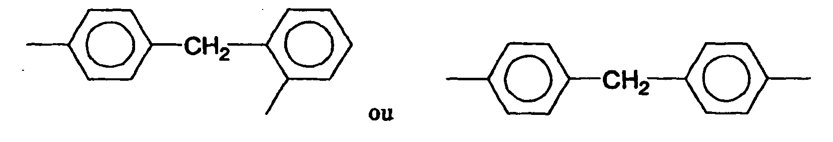
   - e)

      -(CH₂)₆- (ou radical hexaméthylène) ;
- R² est le radical divalent éthylène et/ou isopropylène ;
- R³ est le radical divalent méthylène et/ou n-propylène ;
- R⁴ et R⁵ représentent chacun le radical méthyle ou éthyle.

Selon une variante plus particulièrement préférée de la composition selon l'invention, le polyuréthane de formule (I) est tel que :
- R¹ est le radical divalent de formule 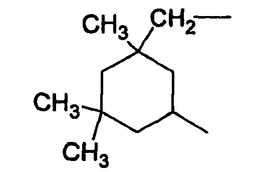 dérivant de l'isophorone ; et
- R² est le radical divalent isopropylène ;
- R³ est le radical divalent n-propylène ;
- le groupe -Si(R⁴)ₚ(OR⁵)₃₋ₚ est le radical triméthoxysilyl.

Selon une variante également avantageuse du PSA selon l'invention, le polyuréthane de formule (I) a un indice de polymolécularité compris entre 1,1 et 2,0. L'indice de polymolécularité est le rapport de la masse moléculaire moyenne en poids à la masse moléculaire moyenne en nombre. Un tel polyuréthane peut être préparé à partir d'un polyéther diol de formule (IV) ayant lui-même un indice de polymolécularité compris entre 1 et 1,6. Un tel polyéther peut être obtenu, de façon connue, par polymérisation de l'oxyde d'alkylène correspondant en présence d'un catalyseur à base d'un double complexe métal-cyanure.

Lorsque R² est le radical isopropylène, le polyuréthane de formules (I) a avantageusement un indice de polymolécularité compris entre 1,3 et 1,6. Un tel polyuréthane peut être préparé à partir d'un poly(isopropoxy) diol (encore dénommé polypropylène glycol ou polyoxyisopropylène diol) dont l'indice de polymolécularité peut varier de 1 à 1,4. De tels polypropylène glycols sont disponibles commercialement. On peut citer à titre d'exemples les polypropylènes glycols ayant un indice de polymolécularité d'environ 1,1 qui sont disponibles sous la marque ACCLAIM^{®} auprès de la société Bayer, tels que l'ACCLAIM^{®} 8200 ayant pour masse molaire moyenne en nombre environ 8250 Da, l'ACCLAIM^{®} 12200 de masse molaire moyenne en nombre 11225 Da et l'ACCLAIM^{®} 18200 de masse molaire moyenne en nombre 18100 Da.

En ce qui concerne les résines tackifiantes qui peuvent être comprises dans la composition selon l'invention, on entend désigner par les termes "résine tackifiante compatible" une résine tackifiante qui, lorsqu'elle est mélangée dans les proportions 50%/50% avec le polymère de formule (I), donne un mélange substantiellement homogène. De telles résines sont disponibles commercialement et parmi celles susceptibles d'être obtenues par les procédés (i) et (ii) définis ci-dessus, on peut citer les produits suivants :
- procédé (i) : Dertophène^{®} 1510 disponible auprès de la société DRT possédant une masse molaire Mn d'environ 870 Da ; Dertophène^{®} H150 disponible auprès de la même société de masse molaire Mn égale à environ 630 Da ; Sylvarez^{®} TP 95 disponible auprès de la société Arizona Chemical ayant une masse molaire Mn d'environ 1200 Da ;
- procédé (ii) : Norsolène^{®} W100 disponible auprès de la société Cray Valley, qui est obtenue par polymérisation d'alpha-méthyl styrène sans action de phénols, avec une masse molaire en nombre de 900 Da ; Sylvarez^{®} 510 qui est également disponible auprès de la société Arizona Chemical avec une masse molaire Mn d'environ 1740 Da, dont le procédé d'obtention comprend l'action de phénols.

Conformément à une variante préférée de la composition adhésive réticulable à chaud selon l'invention, les résines tackifiantes mises en oeuvre sont susceptibles d'être obtenues par le procédé (i) tel que défini ci-dessus.

Le catalyseur de réticulation utilisable dans la composition selon l'invention peut être tout catalyseur connu par l'homme du métier pour la condensation de silanol. On peut citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

Selon une variante préférée, la composition adhésive réticulable à chaud comprend de 40 à 65 % du polyuréthane de formule (I) et 35 à 60 % de résine tackifiante.

A titre optionnel, la composition selon l'invention peut également inclure en combinaison avec le polyuréthane à groupes terminaux hydrolysables de formule (I) des polymères thermoplastiques souvent utilisés dans la préparation des HMPSA, tels que l'Ethylène Vinyl Acétate (EVA) ou des copolymères blocs styréniques.

La composition adhésive réticulable à chaud selon invention peut également comprendre outre une résine tackifiante susceptible d'être obtenue par le procédé (i) ou (ii) d'autres résines tackifiantes de masse molaire moyenne en nombre comprise entre 200 et 5000 Da qui peuvent également être incorporées isolément ou en mélange. On peut citer parmi les résines envisageables :
- (üi) des colophanes d'origine naturelle ou modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol ;
- (iv) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (v) des résines terpéniques résultant généralement de la polymérisation d'hydrocarbures terpéniques comme par exemple le mono-terpène (ou pinène) en présence de catalyseurs de Friedel-Crafts ;
- (vi) des copolymères à base de terpènes naturels, par exemple le styrène/terpène, l'alpha-méthyl styrène/terpène et le vinyl toluène/terpène ;
- (vii) des résines acryliques.

La teneur de telles résines dans la composition selon l'invention ne devrait toutefois pas dépasser 40 % du poids total de résines tackifiantes présentes dans la composition.

La composition adhésive réticulable à chaud selon l'invention peut en outre comprendre jusqu'à 3 % d'un dérivé alkoxysilane hydrolysable, en tant qu'agent dessicant, et de préférence un dérivé de triméthoxysilane. Un tel agent prolonge avantageusement la durée de conservation de la composition selon l'invention durant le stockage et le transport, avant son utilisation. On peut citer par exemple le gamma-métacryloxypropyltriméthoxysilane disponible sous la dénomination commerciale SILQUEST^{®} A-174 auprès de la société US Momentive Performance Materials Inc.

La composition selon l'invention peut aussi inclure un plastifiant tel qu'un phtalate ou un benzoate, une huile paraffinique et naphténique (comme le Primol^{®} 352 de la société ESSO) ou encore une cire d'un homopolymère de polyethylène (comme l'A-C^{®} 617 de Honeywell), ou une cire d'un copolymère de polyéthylène et d'acétate de vinyle, ou encore des pigments, des colorants ou des charges.

Enfin, une quantité de 0,1 à 2 % d'un ou plusieurs stabilisants (ou anti-oxydants) est de préférence incluse dans la composition selon l'invention. Ces composés sont introduits pour protéger la composition d'une dégradation résultant d'une réaction avec de l'oxygène qui est susceptible de se former par action de la chaleur ou de la lumière. Ces composés peuvent inclure des anti-oxydants primaires qui piègent les radicaux libres et sont notamment des phénols substitués comme l'Irganox^{®} 1076 de CIBA. Les anti-oxydants primaires peuvent être utilisés seuls ou en combinaison avec d'autres anti-oxydants secondaires ou des stabilisants UV.

La composition adhésive réticulable à chaud selon l'invention peut être préparée par un procédé qui comprend :
- une étape de mélange à l'abri de l'air, de préférence sous atmosphère inerte, du polymère de formule (I) avec la ou les résines tackifiantes, à une température comprise entre 50 et 170°C, de préférence entre 100 et 170°C, puis
- une étape de refroidissement dudit mélange à une température allant de 50 à 90°C, et avantageusement d'environ 70 °C, puis
- une étape d'incorporation dans ledit mélange du catalyseur et, le cas échéant, de l'agent dessicant et des autres composants optionnels.

La présente invention a également pour objet un support auto-adhésif susceptible d'être obtenu par le procédé comprenant :
- (a) le préchauffage à une température comprise entre 50 et 130°C de la composition adhésive telle que définie précédemment, puis
- (b) son enduction sur une couche support, puis
- (c) sa réticulation, par chauffage du support ainsi enduit à une température comprise entre 50 et 150°C.

L'étape (b) d'enduction de la couche support est réalisée au moyen de dispositifs d'enduction connus, comme par exemple une buse à lèvre ou de type rideau, ou encore au rouleau. Elle met en oeuvre un grammage de composition adhésive allant de 3 à 500 g/m², de préférence de 10 à 250 g/m². Le matériau utilisable pour la couche support est par exemple du papier ou un film d' un matériau polymère à une ou plusieurs couches.

Le temps nécessaire à la réticulation de l'étape (c) peut varier dans de larges limites, par exemple entre 1 seconde et 10 minutes.

Cette étape de réticulation thermique a pour effet la création - entre les chaînes polymériques du polyuréthane de formule (I) et sous l'action de l'humidité atmosphérique- de liaisons de type siloxane qui conduisent à la formation d'un réseau polymérique tridimensionnel. La composition adhésive ainsi réticulée est un adhésif sensible à la pression qui confère à la couche support qui en est revêtue le pouvoir adhésif et le tack désirables.

Ainsi, un support de PolyEthylèneTéréphtalate (PET) revêtu à raison d'un grammage de 20 g/m² présente une adhésion permanente sur un substrat d'acier inoxydable correspondant à un pouvoir adhésif (mesuré par le test de pelage à 180° sur acier inoxydable décrit ci-après) avantageusement compris entre 1 et 15 N/cm, de préférence entre 2 et 10 N/cm. Le tack de ce même support à température ambiante (mesuré par le test d'adhésion instantanée de la boucle décrit ci-après) est avantageusement compris entre 0,5 et 8, de préférence entre 2 et 6 N/cm².

De même, un support de PolyEthylèneTéréphtalate (PET) revêtu à raison d'un grammage de 200 g/m² présente une adhésion permanente sur un substrat d'acier inoxydable correspondant à un pouvoir adhésif avantageusement compris entre 1 et 50 N/cm, de préférence entre 5 et 30 N/cm. Le tack de ce même support à température ambiante est avantageusement compris entre 1 et 30 N/cm², de préférence entre 4 et 15 N/cm².

Enfin, le joint de colle formé après application sur un substrat de la couche support revêtue de la composition réticulée assure la fixation de ladite couche support dans un domaine de température allant de -60C à +200°C.

Le support auto-adhésif selon l'invention peut également comprendre une couche anti-adhérente protectrice recouvrant la couche de PSA, ladite couche protectrice étant simplement contre-collée.

La présente invention concerne également l'utilisation du support auto-adhésif défini précédemment pour la fabrication d'étiquettes et/ou rubans auto-adhésifs.

Le grammage de composition adhésive réticulable à chaud nécessaire pour la fabrication d'étiquettes auto-adhésives peut aller de 10 à 100 g/m², de préférence de 20 à 50 g/m². Celui nécessaire pour la fabrication de rubans auto-adhésifs peut varier dans un domaine beaucoup plus large allant de 3 à 500 g/m², de préférence de 15 à 250 g/m².

Les exemples suivants sont donnés à titre purement illustratif de l'invention et ne sauraient être interprétés pour en limiter la portée.

Les exemples A à C illustrent la préparation de polyuréthanes de formule (I) dans laquelle les 2 groupes terminaux de type alkoxysilane sont constitués par le radical triméthoxysityl, R² est le radical isopropylène et R³ est le radical n-propylène.

### Exemple A : préparation du polyuréthane A de formule (I) dans laquelle le bloc polyéther de formule -[OR²]ₙ- a une masse molaire d'environ 8250 Da :

Dans un réacteur en verre sont introduits :
- 961,2 g (0,1165 mole) du poly(isopropoxy) diol ACCLAIM^{®} 8200,
- 12,99 g (0,0582 mole) d'isophorone diisocyanate (IPDI), ce qui correspond à un rapport des nombres de fonctions NCO/OH égal à 0,5 ; et:
- 120 ppm d'un catalyseur de type neodécanoate de bismuth et de zinc (disponible commercialement auprès de la société Borchers, sous la dénomination Borchi Kat VP 0244).

Ce mélange est maintenu sous agitation constante à 85 °C et sous azote pendant 3 heures, jusqu'à réaction complète des fonctions NCO de l'IPDI.

Au polyuréthane à terminaisons hydroxyles ainsi obtenu sont ensuite ajoutés 24,6 g (0,1165 mole) de gamma-isocyanato-n-propyl-triméthoxysilane et le mélange est maintenu à 85°C jusqu'à disparition totale des fonctions NCO.

Le polyuréthane A obtenu a une viscosité de 55 Pa.s (mesurée au viscosimètre Brookfield à 23°C, avec une aiguille 7 tournant à raison de 20 tr/min), une masse molaire moyenne en nombre d'environ 20 kDa et un indice de polymolécularité d'environ 1,3.

### Exemple B : préparation du polyuréthane B de formule (I) dans laquelle le bloc polyéther de formule -[OR²]ₙ- a une masse molaire d'environ 11225 Da :

On répète exemple A en introduisant dans le réacteur en verre 1100 g (0,098 mole) du poly(isopropoxy) diol ACCLAIM^{®} 12200 et 10,9 g (0,049 mole) d'IPDI, ce qui correspond également à un rapport des nombres de fonctions NCO/OH égal à 0,5, et en ajoutant au polyuréthane à terminaisons hydroxyles obtenu 20,7 g (0,098 mole) du gamma-isocyanato-n-propyl-triméthoxysilane.

Le polyuréthane B obtenu a une viscosité de 185 Pa.s (mesurée dans les mêmes conditions), une masse molaire moyenne en nombre d'environ 30 kDa et un indice de polymolécularité d'environ 1,4.

### Exemple C : préparation du polyuréthane C de formule (I) dans laquelle le bloc polyéther de formule -[OR²]ₙ- a une masse molaire d'environ 18100 Da :

On répète exemple A en introduisant dans le réacteur en verre 1220 g (0,0685 mole) du poly(isopropoxy) diol ACCLAlM^{®} 18200 et 7,03 g (0,0342 mole) d'IPDI, ce qui correspond également à un rapport des nombres de fonctions NCO/OH égal à 0,5, et en ajoutant au polyuréthane à terminaisons hydroxyles obtenu 14,45 g (0,0685 mole) du gamma-isocyanato-n-propyl-triméthoxysilane.

Le polyuréthane C obtenu a une viscosité de 390 Pa.s (mesurée dans les mêmes conditions), une masse molaire moyenne en nombre d'environ 40 kDa et un indice de polymolécularité d'environ 1,5.

### Exemple 1 :

### 1) Préparation d'une composition adhésive réticulable par chauffage à base de polyurethane A :

La composition figurant dans le tableau suivant est préparée en introduisant tout d'abord la résine tackifiante (Dertophène^{®} 1510) dans un réacteur en verre sous vide et chauffé à environ 160°C. Puis, une fois la résine bien fondue, le polyuréthane A est ajouté. Le mélange est agité sous vide durant 15 minutes, puis refroidi à 70°C. L'agent dessicant (SILQUEST^{®} A-174) et le catalyseur (K-KAT^{®} 5218) sont alors introduits. Le mélange est maintenu sous vide et sous agitation durant 10 minutes supplémentaires.

La viscosité du mélange est déterminée à 100°C, au moyen d'un viscosimètre de type Brookfield (équipé du système Thermosel destiné aux mesures de viscosité à haute température) muni d'une aiguille A29 tournant à 10 tr/min.

Le résultat, exprimé en Pa.s, est indiqué dans le tableau.

### 2) Préparation de 2 couches support PET revêtues de la composition réticulée, à raison de 2 grammages égaux à 20 et 200 g/m² :

On utilise comme couche support une feuille rectangulaire de PolyEthylèneTéréphtalate (PET) d'épaisseur 50 µm et de dimensions 20 cm sur 40 cm.

On préchauffe la composition obtenue en 1) à une température proche de 100°C et on l'introduit dans une cartouche d'où l'on extrude un cordon qui est déposé près du bord de la feuille parallèlement à sa largeur.

La composition renfermée dans ce cordon est ensuite répartie sur la totalité de la surface de la feuille, de manière à obtenir une couche uniforme et d'épaisseur sensiblement constante. On utilise pour cela un tire-film (également dénommé filmographe) qui est déplacé du bord de la feuille au bord opposé. On dépose ainsi une couche de composition correspondant à un grammage de 20 g/m², ce qui représente environ une épaisseur de l'ordre de 20µm

On répète l'opération avec une nouvelle couche support de PET de manière à déposer sur celle-ci une couche de composition correspondant à un grammage de 200 g/m², ce qui représente environ à une épaisseur de l'ordre de 200 µm.

Les 2 feuilles de PET ainsi revêtues sont alors placées dans une étuve à 130 °C durant 5 minutes pour réticulation de la composition.

Chacune des 2 feuilles est alors contrecollée sur une couche anti-adhérente protectrice consistant en une feuille de film siliconé, rectangulaire et de mêmes dimensions.

Les 2 couches support PET ainsi obtenues sont soumises aux tests décrits ci-après.

### Test de pelage à 180° sur plaque d'acier inoxydable :

Le pouvoir adhésif est évalué par le test de pelage (ou peel) à 180° sur plaque d'acier inoxydable tel que décrit dans la méthode FINAT n° 1, publiée dans le Manuel Technique FINAT 6ème édition, 2001. FINAT est la fédération internationale des fabricants et transformateurs d'étiquettes auto-adhésives. Le principe de ce test est le suivant.

Une éprouvette sous forme de bande rectangulaire (25 mm x 175 mm) est découpée dans la couche support PET revêtu de la composition réticulée obtenue précédemment. Cette éprouvette est fixée sur les 2/3 de sa longueur (après enlèvement de la portion de couche anti-adhérente protectrice correspondante), sur un substrat constitué d'une plaque d'acier inoxydable. L'assemblage obtenu est laissé 20 minutes à température ambiante. Il est alors placé dans un appareil de traction capable, à partir de l'extrémité restée libre de la bande rectangulaire, d'effectuer le pelage ou décollement de la bande sous un angle de 180° et avec une vitesse de séparation de 300 mm par minute. L'appareil mesure la force requise pour décoller la bande dans ces conditions.

Les résultats correspondant aux 2 grammages, 20 et 200 g/m², sont exprimés en N/cm et indiqués dans le tableau suivant.

### Test d'adhésion instantanée (également dénommé test de la boucle) :

Le pouvoir collant immédiat ou tack est évalué par le test d'adhésion instantanée dit de la boucle, décrit dans la méthode FINAT n° 9, dont le principe est le suivant.

Une éprouvette sous forme de bande rectangulaire (25 mm x 175 mm) est découpée dans la couche support PET revêtu de la composition réticulée obtenue précédemment. Après enlèvement de la totalité de la couche anti-adhérente protectrice, les 2 extrémités de cette bande sont jointes de manière à former une boucle dont la couche adhésive est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque.

Les résultats correspondant aux 2 grammages de 20 et 200 g/m², sont exprimés en N/cm² et sont indiqués dans le tableau suivant.

### Temps de résistance du joint de colle au cisaillement statique à 90°C :

Le maintien à température élevée du pouvoir adhésif de la couche support PET obtenue précédemment est évalué par un test qui détermine le temps de résistance du joint de colle au cisaillement statique à 90°C. Il est fait référence pour ce test à la méthode FINAT n° 8. Le principe est le suivant

Une éprouvette sous forme de bande rectangulaire (25 mm x 75 mm) est découpée dans chacune des 2 couche support PET précédentes. Après enlèvement de la totalité de la couche anti-adhérente protectrice, une portion carrée de 25 mm de côté située à l'extrémité de la bande adhésive est fixée sur une plaque de verre.

La plaque d'essai ainsi obtenue est introduite, au moyen d'un support approprié, en position sensiblement verticale dans une étuve à 90°C, la partie non collée de la bande de longueur 50 mm se situant en dessous de la plaque. Après équilibrage thermique, la partie restée libre de la bande est reliée à une masse de 1 kg, l'ensemble du dispositif restant toujours durant la durée du test maintenu dans l'étuve à 90°C.

Sous l'effet de cette masse, le joint de colle qui assure la fixation de la bande sur la plaque est soumis à une contrainte de cisaillement Pour mieux contrôler cette contrainte, la plaque d'essai est en fait placée de sorte à faire un angle de 2° par rapport à la verticale.

On note le temps au bout duquel la bande se décroche de la plaque à la suite de la rupture du joint de colle sous l'effet de cette contrainte.

Pour les 2 grammages de 20 et 200 g/m², ce temps est supérieur aux 24 heures de durée du test.

### Température entraînant la rupture du joint de colle au cisaillement statique :

Le maintien en température du pouvoir adhésif de la couche support PET obtenue précédemment est évalué à titre complémentaire par le test de détermination de la température entraînant la rupture du joint de colle au cisaillement statique. Ce test est également connu sous sa dénomination anglaise de Shear Adhesion Failure Temperature (SAFT).

On répète les opérations décrites dans le test précédent, sauf que l'on utilise une étuve dont la température initiale est de 20 °C à la fois pour l'équilibrage thermique initial de la plaque d'essai, et également pour l'ensemble du dispositif avec la masse de 1 kg. Cette étuve est soumise à une montée en température programmée à raison de 1,6°C par minute.

On note la température à laquelle la bande se décroche de la plaque à la suite de la rupture du joint de colle sous l'effet de cette contrainte.

Pour les 2 grammages de 20 et 200 g/m², cette température est supérieure à 180°C.

### Exemples 2 à 8 :

On répète l'exemple 1 avec les compositions indiquées dans le tableau suivant

On obtient les mêmes résultats, s'agissant du temps de résistance du joint de colle au cisaillement statique à 90°C et de la température entraînant la rupture du joint de colle au cisaillement statique.

Les résultats du test de pelage à 180° sur plaque d'acier inoxydable et du test d'adhésion instantanée sont également indiqués dans le tableau, sauf certaines valeurs non déterminées (indiquées par nd).

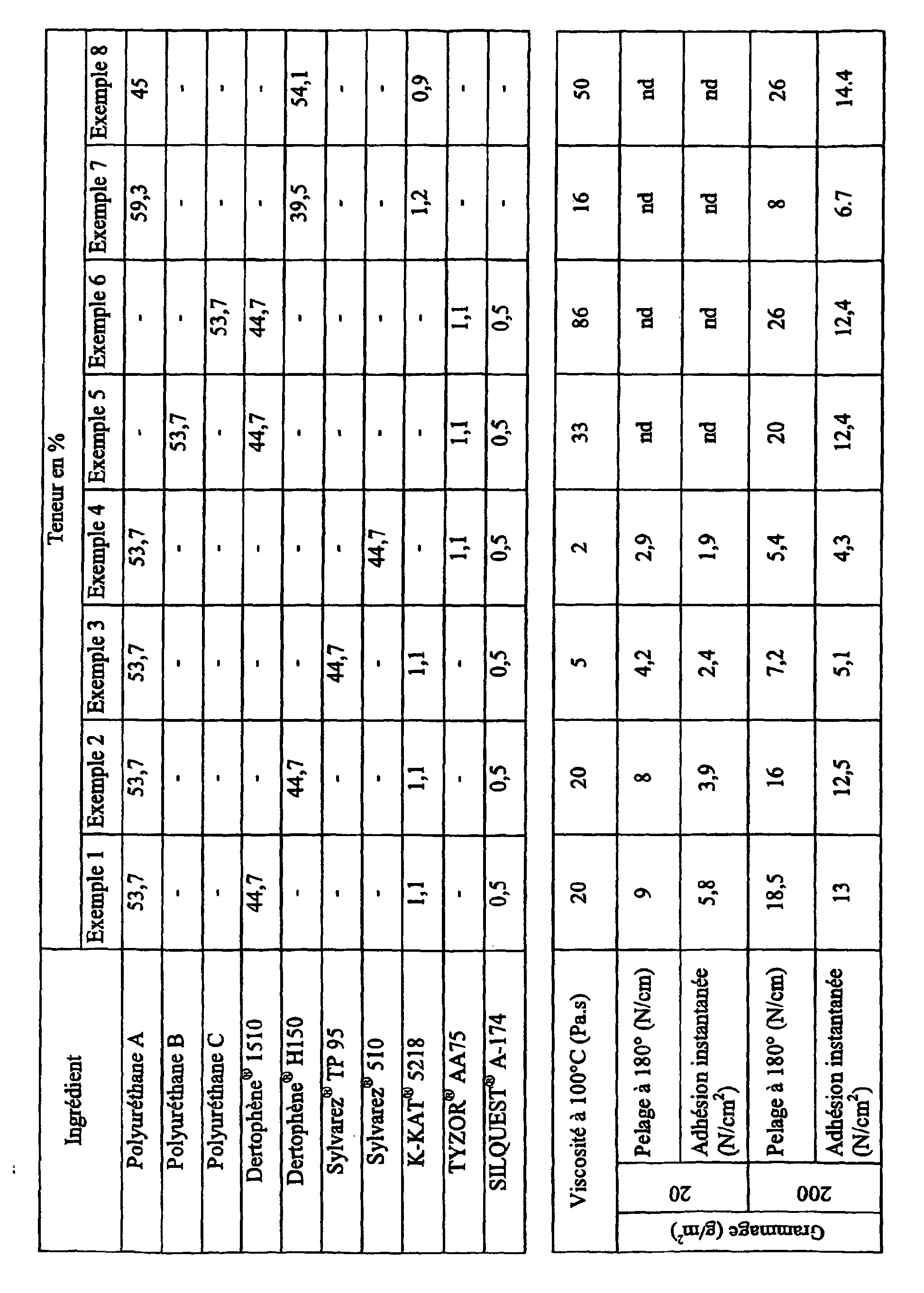

## Revendications

1. Composition adhésive réticulable par chauffage comprenant :
- de 20 à 85 % d'un polyuréthane comprenant 2 groupes terminaux de type alkoxysilane hydrolysables et ayant pour formule (I) : 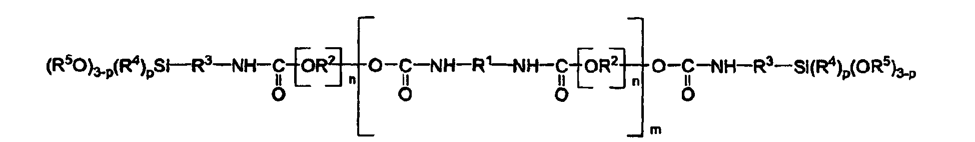 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 4 atomes de carbone, avec la possibilité lorsqu'il y a plusieurs radicaux R⁴ (ou R⁵) que ceux-ci soient identiques ou différents ;
- n est un nombre entier tel que la masse molaire moyenne en nombre du bloc polyéther de formule -[OR²]ₙ- est comprise entre 300 Da et 30 kDa ;
- m est un nombre entier tel que la masse molaire moyenne en nombre du polymère de formule (I) est comprise entre 600 Da et 60 kDa ; ,
- p est un nombre entier égal à 0, 1 ou 2 ;
- de 15 à 80 % d'une résine tackifiante compatible, de masse molaire moyenne en nombre comprise entre 200 Da et 5 kDa, et choisie parmi les résines susceptibles d'être obtenues :
- (i) par polymérisation d'hydrocarbures terpéniques et de phénols, en présence de catalyseurs de Friedel-Crafts, ou bien
- (ii) par polymérisation d'alpha-méthyl styrène, et éventuellement par réaction avec des phénols ; et
- de 0,01 à 3 % d'un catalyseur de réticulation.

2. Composition adhésive selon la revendication 1, **caractérisée en ce que** le polyuréthane de formule (I) est tel que sa masse molaire moyenne en nombre est comprise entre 4 et 50 kDa et la masse molaire moyenne en nombre du bloc polyéther de formule - [OR²]ₙ- est comprise entre 2 et 25 kDa.

3. Composition adhésive selon l'une des revendications 1 ou 2, **caractérisée en ce que** le polyuréthane de formule (I) est tel que :
- R¹ est choisi parmi l'un des radicaux divalents suivants dont les formules ci-dessous font apparaître les 2 valences libres :
- a) le radical divalent dérivé de l'isophorone : 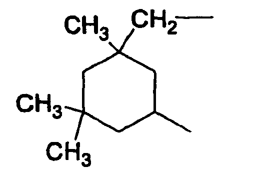
- b) 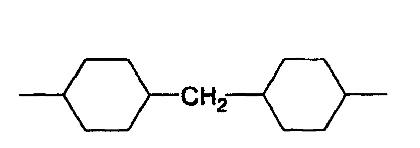
- c) 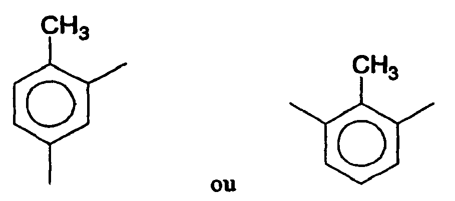
- d) 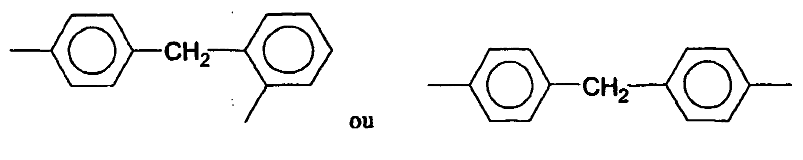
- e)
-(CH₂)₆- (ou radical hexaméthylène) ;
- R² est le radical divalent éthylène et/ou isopropylène ;
- R³ est le radical divalent méthylène et/ou n-propylène ;
- R⁴ et R⁵ représentent chacun le radical méthyle ou éthyle.

4. Composition adhésive selon l'une des revendications 1 à 3, **caractérisée en ce que** le polyuréthane de formule (I) est tel que :
- R¹ est le radical divalent dérivant de l'isophorone de formule : 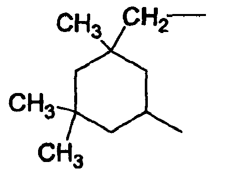
- R² est le radical divalent isopropylène ;
- R³ est le radical divalent n-propylène ;
- le groupe -Si(R⁴)ₚ(OR⁵)₃₋ₚ est le radical triméthoxysilyl.

5. Composition adhésive selon l'une des revendications 1 à 4, **caractérisée en ce que** le polyuréthane de formule (I) dans laquelle R² est le radical isopropylène a un indice de polymolécularité compris entre 1,3 et 1,6.

6. Composition adhésive selon l'une des revendications 1 à 5, **caractérisée en ce que** les résines tackifiantes mises en oeuvre sont susceptibles d'être obtenues par le procédé (i).

7. Composition adhésive selon l'une des revendications 1 à 6, **caractérisée en ce qu'**elle comprend de 40 à 65 % du polyuréthane de formule (I) et de 35 à 60 % de résine tackifiante.

8. Composition adhésive selon l'une des revendications 1 à 6, **caractérisée en ce qu'**elle comprend jusqu'à 3 % d'un dérivé alkoxysilane hydrolysable, en tant qu'agent dessicant, et de préférence un dérivé de triméthoxysilane.

9. Support auto-adhésif susceptible d'être obtenu par le procédé comprenant :
- (a) le préchauffage à une température comprise entre 50 et 130°C de la composition adhésive telle que définie dans l'une des revendications 1 à 8, puis
- (b) son enduction sur une couche support, puis
- (c) sa réticulation, par chauffage du support ainsi enduit à une température comprise entre 50 et 150°C.

10. Utilisation du support auto-adhésif tel que défini dans la revendication 9 pour la fabrication d'étiquettes et/ou rubans auto-adhésifs.

## Claims

1. Heat-curable adhesive composition comprising:
- from 20 to 85% of a polyurethane comprising 2 hydrolysable alkoxysilane-type end groups and having the formula (I): 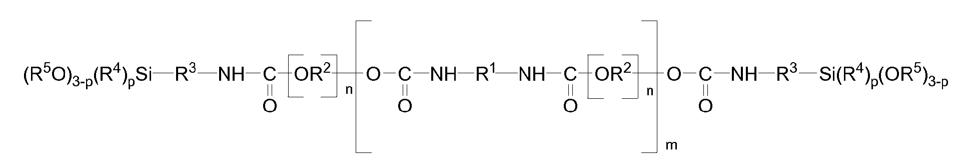 in which:
- R¹ represents a hydrocarbon-based divalent radical comprising from 5 to 15 carbon atoms which may be aromatic or aliphatic, linear, branched or cyclic;
- R² represents a linear or branched alkylene divalent radical comprising from 1 to 4 carbon atoms;
- R³ represents a linear alkylene divalent radical comprising from 1 to 3 carbon atoms;
- R⁴ and R⁵, which are identical or different, each represent a linear or branched alkyl radical having 1 to 4 carbon atoms, with the possibility, when there are several R⁴ (or R⁵) radicals, that these are identical or different;
- n is an integer such that the number-average molecular weight of the polyether block of formula - [OR²]ₙ- is between 300 Da and 30 kDa;
- m is an integer such that the number-average molecular weight of the polymer of formula (I) is between 600 Da and 60 kDa;
- p is an integer equal to 0, 1 or 2;
- from 15 to 80% of a compatible tackifying resin, having a number-average molecular weight between 200 Da and 5 kDa, chosen from the resins capable of being obtained:
- (i) by polymerization of terpene hydrocarbons and of phenols, in the presence of Friedel-Crafts catalysts; or else
- (ii) by polymerization of α-methylstyrene, and optionally by reaction with phenols; and
- from 0.01 to 3% of a curing catalyst.

2. Adhesive composition according to Claim 1, **characterized in that** the polyurethane of formula (I) is such that its number-average molecular weight is between 4 and 50 kDa and the number-average molecular weight of the polyether block of formula -[OR²]ₙ- is between 2 and 25 kDa.

3. Adhesive composition according to either of Claims 1 and 2, **characterized in that** the polyurethane of formula (I) is such that:
- R¹ is chosen from one of the following divalent radicals, the formulae of which below show the 2 free valences:
- a) the divalent radical derived from isophorone: 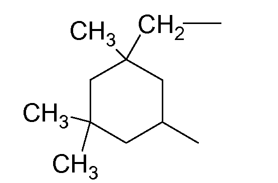
- b) 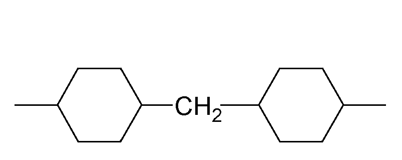
- c) 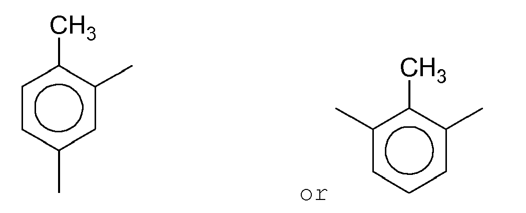
- d) 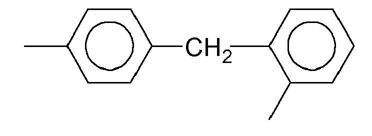 or 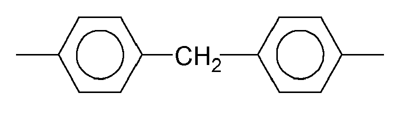
- e)
-(CH₂)₆- (or hexamethylene radical);
- R² is the ethylene and/or isopropylene divalent radical;
- R³ is the methylene and/or n-propylene divalent radical; and
- R⁴ and R⁵ each represent the methyl or ethyl radical.

4. Adhesive composition according to one of Claims 1 to 3, **characterized in that** the polyurethane of formula (I) is such that:
- R¹ is the divalent radical that derives from isophorone of formula: 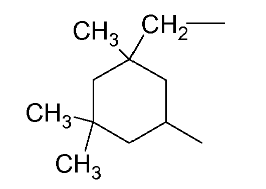
- R² is the isopropylene divalent radical;
- R³ is the n-propylene divalent radical; and
- the -Si(R⁴)ₚ(OR⁵)₃₋ₚ group is the trimethoxysilyl radical.

5. Adhesive composition according to one of Claims 1 to 4, **characterized in that** the polyurethane of formula (I) in which R² is the isopropylene radical has a polydispersity index between 1.3 and 1.6.

6. Adhesive composition according to one of Claims 1 to 5, **characterized in that** the tackifying resins used are capable of being obtained by the process (i).

7. Adhesive composition according to one of Claims 1 to 6, **characterized in that** it comprises from 40 to 65% of polyurethane of formula (I) and from 35 to 60% of tackifying resin.

8. Adhesive composition according to one of Claims 1 to 6, **characterized in that** it comprises up to 3% of a hydrolysable alkoxysilane derivative, as a desiccant, and preferably a derivative of trimethoxysilane.

9. Self-adhesive support capable of being obtained by the process comprising:
- (a) preheating the adhesive composition as defined in one of Claims 1 to 8 at a temperature between 50 and 130°C; then
- (b) coating it onto a support layer; then
- (c) curing it, by heating the thus coated support at a temperature between 50 and 150°C.

10. Use of the self-adhesive support as defined in Claim 9 for the manufacture of self-adhesive labels and/or tapes.

## Patentansprüche

1. Durch Erhitzen vernetzbare Klebstoffzusammensetzung, umfassend:
- 20 bis 85% eines Polyurethans mit 2 hydrolysierbaren Alkoxysilan-Endgruppen und der Formel (I) : 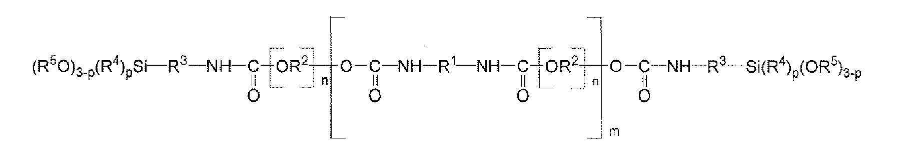 worin:
- R¹ für einen zweiwertigen Kohlenwasserstoffrest mit 5 bis 15 Kohlenstoffatomen steht, der aromatisch oder aliphatisch, linear, verzweigt oder cyclisch sein kann;
- R² für einen linearen oder verzweigten zweiwertigen Alkylenrest mit 1 bis 4 Kohlenstoffatomen steht;
- R³ für einen linearen zweiwertigen Alkylenrest mit 1 bis 3 Kohlenstoffatomen steht;
- R⁴ und R⁵ gleich oder verschieden sind und jeweils für einen linearen oder verzweigten Alkylrest mit 1 bis 4 Kohlenstoffatomen stehen, wobei dann, wenn mehrere Reste R⁴ (oder R⁵) vorliegen, diese gleich oder verschieden sein können;
- n für eine solche ganze Zahl steht, daß das zahlenmittlere Molekulargewicht des Polyetherblocks der Formel -[OR²]ₙ- zwischen 300 Da und 30 kDa liegt;
- m für eine solche ganze Zahl steht, daß das zahlenmittlere Molekulargewicht des Polymers der Formel (I) zwischen 600 Da und 60 kDa liegt;
- p für eine ganze Zahl mit einem Wert von 0, 1 oder 2 steht;
- 15 bis 80% eines kompatiblen klebrigmachenden Harzes, das ein zahlenmittleres Molekulargewicht zwischen 200 Da und 5 kDa aufweist und unter den Harzen ausgewählt ist, die
- (i) durch Polymerisation von Terpenkohlenwasserstoffen und Phenolen in Gegenwart von Friedel-Crafts-Katalysatoren oder auch
- (ii) durch Polymerisation von alpha-Methylstyrol und gegebenenfalls durch Umsetzung mit Phenolen
erhältlich sind; und
- 0,01 bis 3% eines Vernetzungskatalysators.

2. Klebstoffzusammensetzung nach Anspruch 1, **dadurch gekennzeichnet, daß** das Polyurethan der Formel (I) so beschaffen ist, daß sein zahlenmittleres Molekulargewicht zwischen 4 und 50 kD liegt und das zahlenmittlere Molekulargewicht des Polyetherblocks der Formel -[OR²]ₙ- zwischen 2 und 25 kDa liegt.

3. Klebstoffzusammensetzung nach Anspruch 1 oder 2, **dadurch gekennzeichnet, daß** das Polyurethan der Formel (I) so beschaffen ist, daß:
- R¹ unter einem der folgenden zweiwertigen Reste ausgewählt ist, deren Formeln nachstehend die 2 freien Valenzen zeigen:
- a) dem von Isophoron abgeleiteten zweiwertigen Rest der Formel: 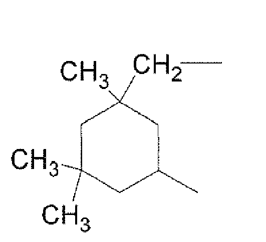
- b) 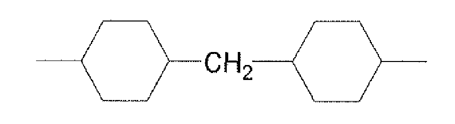
- c) 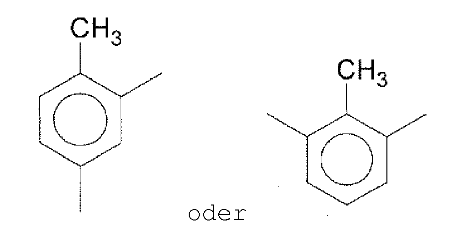
- d) 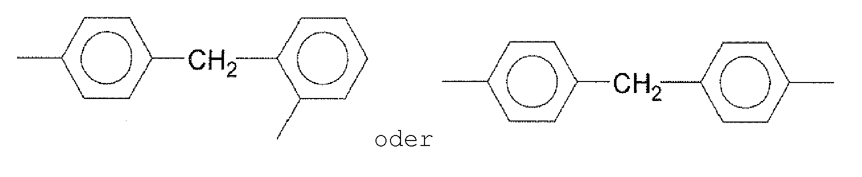
- e)
-(CH₂)₆- (oder dem Hexamethylenrest) ;
- R² für den zweiwertigen Ethylen- und/oder Isopropylenrest steht;
- R³ für den zweiwertigen Methylen- und/oder n-Propylenrest steht;
- R⁴ und R⁵ jeweils für den Methyl- oder Ethylrest stehen.

4. Klebstoffzusammensetzung nach einem der Ansprüche 1 bis 3, **dadurch gekennzeichnet, daß** das Polyurethan der Formel (I) so beschaffen ist, daß:
- R¹ für den von Isophoron abgeleiteten zweiwertigen Rest der Formel: 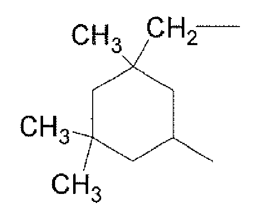 steht;
- R² für den zweiwertigen Isopropylenrest steht;
- R³ für den zweiwertigen n-Propylenrest steht;
- die Gruppe -Si(R⁴)ₚ(OR⁵)₃₋ₚ für den Trimethoxysilylrest steht.

5. Klebstoffzusammensetzung nach einem der Ansprüche 1 bis 4, **dadurch gekennzeichnet, daß** das Polyurethan der Formel (I), worin R² für den Isopropylenrest steht, einen Polydispersitätsindex zwischen 1,3 und 1,6 aufweist.

6. Klebstoffzusammensetzung nach einem der Ansprüche 1 bis 5, **dadurch gekennzeichnet, daß** die verwendeten klebrigmachenden Harze nach Verfahren (i) erhältlich sind.

7. Klebstoffzusammensetzung nach einem der Ansprüche 1 bis 6, **dadurch gekennzeichnet, daß** sie 40 bis 65% des Polyurethans der Formel (I) und 35 bis 60% klebrigmachendes Harz umfaßt.

8. Klebstoffzusammensetzung nach einem der Ansprüche 1 bis 6, **dadurch gekennzeichnet, daß** sie bis zu 3% eines hydrolysierbaren Alkoxysilanderivats als Trockenmittel und vorzugsweise ein Trimethoxysilanderivat umfaßt.

9. Selbstklebender Träger, der nach dem Verfahren erhältlich ist, bei dem man:
- (a) die Klebstoffzusammensetzung gemäß einem der Ansprüche 1 bis 8 auf eine Temperatur zwischen 50 und 130°C vorerhitzt,
- (b) sie dann auf eine Trägerschicht aufbringt,
- (c) sie dann durch Erhitzen des so beschichteten Trägers auf eine Temperatur zwischen 50 und 150°C vernetzt.

10. Verwendung des selbstklebenden Trägers gemäß Anspruch 9 zur Herstellung von Selbstklebeetiketten und/oder -bändern.
